# EUROPEAN PATENT SPECIFICATION

(11) **EP 4 481 013 B1**
(45) Date of publication and mention of the grant of the patent: **25.11.2026**
(21) Application number: 23912316.9
(22) Date of filing: 28.12.2023
(51) Int. Cl.: C09K 5/04, F25B 1/00

(54) **REFRIGERANT-CONTAINING COMPOSITION, USE OF SAME, REFRIGERATOR COMPRISING SAME, AND METHOD FOR OPERATING REFRIGERATOR**
KÄLTEMITTELHALTIGE ZUSAMMENSETZUNG, VERWENDUNG DAVON, KÜHLSCHRANK DAMIT UND VERFAHREN ZUM BETRIEB EINES KÜHLSCHRANKS
COMPOSITION CONTENANT UN RÉFRIGÉRANT, APPLICATION ASSOCIÉE, MACHINE FRIGORIFIQUE POSSÉDANT LADITE COMPOSITION, ET PROCÉDÉ DE FONCTIONNEMENT DE LADITE MACHINE FRIGORIFIQUE

(30) Priority: 28.12.2022 JP 2022212091
(43) Date of publication of application: 25.12.2024
(73) Proprietor: DAIKIN INDUSTRIES, LTD., Osaka-shi, Osaka 530-0001 (JP)
(72) Inventor: ITANO, Mitsushi, Osaka-Shi, Osaka 530-0001 (JP); NAKAUE, Tsubasa, Osaka-Shi, Osaka 530-0001 (JP); KOMATSU, Yuzo, Osaka-Shi, Osaka 530-0001 (JP)
(74) Representative: Hoffmann Eitle
(86) International application number: PCT/JP2023/047266
(87) International publication number: WO 2024/143539

(56) References cited:
- WO-A1-2015/186558
- WO-A1-2019/123805
- WO-A1-2019/123806
- WO-A1-2019/124403
- WO-A1-2020/255986
- WO-A1-2020/256098
- WO-A1-2022/075389
- JP-A- 2015 229 767

## Description

### Technical Field

The present invention relates to the use of a composition comprising a refrigerant as a working fluid in a refrigerating machine, a refrigerating machine having the composition, and a method for operating the refrigerating machine.

### Background Art

A working medium for thermal cycling that contains trifluoroethylene (HFO-1123) and 1,2-difluoroethylene (HFO-1132)has been proposed as a working medium for thermal cycling that can replace R410A (WO2015/141678).

WO 2020/255986 (US-A-2022/0106242) discloses a method for producing a working medium containing difluoroethylene, such as HFO-1132(E), comprising mixing a first component containing difluoroethylene at a ratio of > 65 mol % and held in a first container, and a second component without self-decomposition properties held in a second container, by specified step (A), (B), or (C). The second component can be, for example, R32. WO 2019/123805 (US-A-2022/0380649) describes a refrigerant composition comprising a refrigerant comprising HFO-1132 (E), HFO-1123, and R32 at specific concentrations.

WO 2019/124403 (US-A-2021/0080152) relates to a mixed refrigerant which is a composition comprising a refrigerant comprising HFO-1132(E), R32, and HFO-1234yf, each in a specific concentration.

WO 2019/123806 (US-A-2020/0317975) concerns a refrigerant composition comprising a refrigerant comprising HFO-1132(E), R32), and HFO-1234yf at specified mixing ratios.

### Summary of Invention

### Technical Problem

An object of the present invention is to provide a novel use of a composition comprising a low-GWP mixed refrigerant as a working fluid in a refrigerating machine.

### Solution to Problem

The present invention provides the use of a composition comprising
(1) a refrigerant which comprises
   (i) ≥ 99.5 mass% in total of trans-1,2-difluoroethylene (HFO-1132(E)) and difluoromethane (R32), based on the entire refrigerant, and
   (ii) 63.0-68.3 mass%, or 70.5-76.5 mass%, or 81.6-83.7 mass%, of HFO-1132(E), based on the total of HFO-1132(E) and R32; and
(2) water, the water being contained in an amount of ≤ 0.1 mass%, based on the entire composition,
as a working fluid in a refrigerating machine.

The above use, composition and refrigerant will also be referred to as "the present use", "the present composition", and "the present refrigerant" hereinafter.

Also, the present invention provides a refrigeration method (also referred to as "the present method" hereinafter) comprising a step of operating a refrigeration cycle using the present composition.

Furthermore, the present invention provides a refrigerating machine (also referred to as "the present refrigerating machine" hereinafter) comprising the present composition as a working fluid.

Preferred embodiments of the invention are as defined in the appended dependent claims and/or in the following detailed description.

### Advantageous Effects of Invention

The present refrigerant has a low GWP.

### Description of Embodiments

In order to achieve the above object, the present inventors conducted extensive research and found that various mixed refrigerants described below have the characteristics described above.

The present invention has been completed as a result of further research based on this finding. The present invention includes the following embodiments.

### <Definition of Terms>

Herein, the term "refrigerant" includes at least compounds that are specified in ISO 817 (International Organization for Standardization) and that are given a refrigerant number (ASHRAE number) representing the type of refrigerant with "R" at the beginning, and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC) .

Herein, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. Of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration-oil-containing working fluid" so as to distinguish it from the "refrigerant composition."

Herein, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

Herein, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

Herein, a refrigerant being allocated to "toxicity class A" means that a mixed refrigerant has an acceptable concentration (Occupational Exposure Limits (OEL)) in accordance with USA ANSI/ASHRAE standard 34-2019 of 400 ppm or more. Besides, a refrigerant being allocated to "toxicity class B" means that a mixed refrigerant has an acceptable concentration in accordance with USA ANSI-ASHRAE standard 34-2019 of less than 400 ppm.

In the present invention, the acceptable concentration (Occupational Exposure Limits (OEL)) of a mixed refrigerant refers to a value obtained by evaluating the center composition unless otherwise specified. The OELs of respective refrigerants are, however, assumed as follows for calculation:
HFO-1132 (E) : 350 ppm
R32: 1000 ppm
HFO-1132a: 500 ppm
R124: 1000 ppm

The OEL of the center composition of a mixed refrigerant is calculated in accordance with the following equation: $OEL = \frac{1}{\frac{{mf}_{1}}{{a}_{1}} + \frac{{mf}_{2}}{{a}_{2}} + … + \frac{{mf}_{n}}{{a}_{n}}}$ wherein aₙ represents the OEL of each refrigerant compound, and mfₙ represents the mole fraction of each refrigerant compound.

In the present specification, the unit of pressure is an absolute pressure unless otherwise specified.

### 1. Refrigerant

The present refrigerant comprises trans-1,2-difluoroethylene (HFO-1132(E)) and difluoromethane (R32) in a total amount of 99.5 mass% or more based on the entire refrigerant.

The present refrigerant may be any of the following (a) - (c) :
(a) a refrigerant comprising 63.0-68.3 mass% of HFO-1132(E), based on the total amount of HFO-1132(E) and R32;
(b) a refrigerant comprising 70.5-76.5 mass% of HFO-1132(E), based on the total amount of HFO-1132(E) and R32; and
(c) a refrigerant comprising 81.6-83.7 mass% of HFO-1132(E), based on the total amount of HFO-1132(E) and R32.

The present refrigerant is a low-GWP mixed refrigerant.

When the present refrigerant comprises 63.0-68.3 mass% of HFO-1132(E), based on the total amount of HFO-1132(E) and R32, the GWP is 250 or less, the ASHRAE toxicity class is A, and the refrigerating capacity ratio relative to R410A is 108% or more.

When the present refrigerant comprises 70.5-76.5 mass% of HFO-1132(E), based on the total amount of HFO-1132(E) and R32, the GWP is 200 or less, the ASHRAE toxicity class is A, and the condensation glide is 0.12K, which is the same as that of R410A, or 0.12 K or less.

When the present refrigerant comprises 81.6-83.7 mass% of HFO-1132(E), based on the total amount of HFO-1132(E) and R32, the GWP is 125 or less, and the ASHRAE toxicity class is A.

The present refrigerant may further comprise an additional refrigerant in addition to HFO-1132(E) and R32 as long as the properties and effects described above are not impaired. In this respect, the present refrigerant according to one embodiment preferably comprises HFO-1132(E) and R32 in a total amount of 99.75 mass% or more, more preferably 99.9 mass% or more, further preferably 99.999 mass% or more, and most preferably 99.9999 mass% or more based on the entire refrigerant. The present refrigerant may substantially consist only of HFO-1132(E) and R32, and in this case, the present refrigerant may also consist only of HFO-1132(E), R32, and an unavoidable impurity. The present refrigerant may consist only of HFO-1132 (E) and R32.

Additional refrigerants are not particularly limited and can be widely selected. The mixed refrigerant may contain one additional refrigerant, or two or more additional refrigerants.

Examples of the additional refrigerant include methylamine, acetylene, HFO-1141, HFO-1123, HFC-143a, HFC-134a, HFO-1132a, Z-HFO-1132, HFO-1243zf, HFC-245cb, HCFC-1122, HCFC-124, CFC-1113, and 3,3,3-trifluoropropyne.

### 2. Refrigerant Composition

The present refrigerant composition comprises at least the present refrigerant, and can be used for the same use as the present refrigerant. Moreover, the present refrigerant composition can be further mixed with at least a refrigeration oil to thereby obtain a working fluid for a refrigerating machine.

The present refrigerant composition further comprises at least one other component in addition to the present refrigerant. The present refrigerant composition may comprise at least one of the following other components, if necessary. As described above, when the present refrigerant composition is used as a working fluid in a refrigerating machine, it is generally used as a mixture with at least a refrigeration oil. Therefore, it is preferable that the present refrigerant composition does not substantially comprise a refrigeration oil. Specifically, in the present refrigerant composition, the content of the refrigeration oil based on the entire refrigerant composition is preferably 1 mass% or less, and more preferably 0.1 mass% or less.

### 2.1. Water

The present refrigerant composition contains a small amount of water. The water content of the refrigerant composition is 0.1 mass% or less, preferably 0.05 mass% or less, and further preferably 0.01 mass% or less based on the entire refrigerant composition. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2. Tracer

A tracer is added to the present refrigerant composition at a detectable concentration so that when the refrigerant composition has been diluted, contaminated, or undergone other changes, the tracer can trace the changes.

The present refrigerant composition may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.
FC-14 (tetrafluoromethane, CF₄)
HCC-40 (chloromethane, CH₃Cl)
HFC-23 (trifluoromethane, CHF₃)
HFC-41 (fluoromethane, CH₃F)
HFC-125 (pentafluoroethane, CF₃CHF₂)
HFC-134a (1,1,1,2-tetrafluoroethane, CF₃CH₂F)
HFC-134 (1,1,2,2-tetrafluoroethane, CHF₂CHF₂)
HFC-143 (1,1,2-trifluoroethane, CHF₂CH₂F)
HFC-152 (1,2-difluoroethane, CH₂FCH₂F)
HFC-161 (fluoroethane, CH₃CH₂F)
HFC-245fa (1,1,1,3,3-pentafluoropropane, CF₃CH₂CHF₂), HFC-236fa (1,1,1,3,3,3-hexafluoropropane, CF₃CH₂CF₃), HFC-236ea (1,1,1,2,3,3-hexafluoropropane, CF₃CHFCHF₂), HFC-227ea (1,1,1,2,3,3,3-heptafluoropropane, CF₃CHFCF₃), HCFC-22 (chlorodifluoromethane, CHClF₂)
HCFC-31 (chlorofluoromethane, CH₂ClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH₂CF₃)

The present refrigerant composition may comprise 10 parts per million by weight (ppm) or more of tracers in total, based on the entire refrigerant composition. The present refrigerant composition may also comprise 1000 ppm or less of tracers in total, based on the entire refrigerant composition. The present refrigerant composition may preferably comprise 30 ppm or more and more preferably 50 ppm or more of tracers in total, and may preferably comprise 500 ppm or less and 300 ppm or less of tracer in total, each based on the entire refrigerant composition.

### 2.3. Ultraviolet Fluorescent Dye

The present refrigerant composition may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The present refrigerant composition may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is preferably 0.01 mass% or more, and more preferably 0.05 mass% or more, and is preferably 5 mass% or less, and more preferably 2 mass% or less, each based on the entire refrigerant.

### 2.5. Polymerization Inhibitor

The present refrigerant composition may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is preferably 0.01 mass% or more, and more preferably 0.05 mass% or more, and is preferably 5 mass% or less, and more preferably 2 mass% or less, each based on the entire refrigerant.

### 3. Refrigeration-Oil-Containing Working Fluid

The refrigeration-oil-containing working fluid ("the present working fluid") comprises at least the present refrigerant or the present refrigerant composition and a refrigeration oil, for use as a working fluid in a refrigerating machine. Specifically, the present working fluid is obtained by mixing a refrigeration oil used in a compressor of a refrigerating machine with the present refrigerant or refrigerant composition. The present working fluid generally comprises 10 mass% or more, and generally comprises 50 mass% or less of refrigeration oil.

### 3.1. Refrigeration Oil

The present composition may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from polyalkylene glycols (PAG), polyol esters (POE), and polyvinyl ethers (PVE).

The refrigeration oil may further contain additives in addition to the base oil. The additive may be at least one member selected from antioxidants, extreme-pressure agents, acid scavengers, oxygen scavengers, copper deactivators, rust inhibitors, oil agents, and antifoaming agents.

A refrigeration oil with a kinematic viscosity of 5 x 10⁻⁶ m²/s (5 cSt) or more at 40°C is preferable from the standpoint of lubrication. A refrigeration oil with a kinematic viscosity of 400 x 10⁻⁶ m²/s (400 cSt) or less at 40°C is preferable from the standpoint of lubrication.

The present working fluid may further optionally contain at least one additive. Examples of additives include compatibilizing agents described below.

### 3.2. Compatibilizing Agent

The present working fluid may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

The present refrigerant, the present refrigerant composition, and the present working fluid can be used as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R474A, R479A, R502, R507, R513A, R1234yf, or R1234ze.

### 4. Method for Operating Refrigerating Machine

The present method is a method for operating a refrigerating machine using the present refrigerant.

Specifically, the present method comprises the step of circulating the present refrigerant in a refrigerating machine.

### Examples

The present invention is described in more detail below with reference to Examples.

Mixed refrigerants were prepared by mixing HFO-1132(E) and R32, and HFO-1132a and R124 at mass% based on their sums shown in Tables 1 and 2.

These mixed refrigerants were evaluated for various physical properties as shown in Tables 1-3.

### GWP, COP, Refrigerating Capacity, and Condensation Glide

The GWP of each mixed refrigerant was evaluated with the GWP of HFO-1132(E) set to 1, and with the GWP of R32, HFO-1132a and R124 based on the values stated in IPCC (Intergovernmental Panel on Climate Change), fourth report. The COP, refrigerating capacity, and condensation glide of mixed refrigerants were determined by performing theoretical refrigeration cycle calculations for the mixed refrigerants using the National Institute of Science and Technology (NIST) and Reference Fluid Thermodynamic and Transport Properties Database (Refprop 10.0) under the following conditions. The physical property data of HFO-1132 (E) were determined from measured values.
Evaporating temperature: 5°C
Condensation temperature: 45°C
Superheating temperature: 5K
Subcooling temperature: 5K
Compressor efficiency: 70%

In the following tables, "COP ratio" and "Refrigerating capacity ratio" each indicate a proportion (%) relative to R410A.

### Acceptable Concentration

The acceptable concentration (Occupational Exposure Limits (OEL)) of a mixed refrigerant refers to a value obtained by evaluating the center composition. The OELs of the respective refrigerants are, however, assumed as follows for calculation:
HFO-1132 (E) : 350 ppm
R32: 1000 ppm
HFO-1132a: 500 ppm
R124: 1000 ppm

The OEL of the center composition of a mixed refrigerant is calculated in accordance with the following equation: $OEL = \frac{1}{\frac{{mf}_{1}}{{a}_{1}} + \frac{{mf}_{2}}{{a}_{2}} + … + \frac{{mf}_{n}}{{a}_{n}}}$ wherein aₙ represents the OEL of each refrigerant compound, and mfₙ represents the mole fraction of each refrigerant compound.

### Toxicity Class

A refrigerant being allocated to "toxicity class A" means that a mixed refrigerant has an acceptable concentration (Occupational Exposure Limits (OEL)) in accordance with USA ANSI/ASHRAE standard 34-2019 of 400 ppm or more. Besides, a refrigerant being allocated to "toxicity class B" means that a mixed refrigerant has an acceptable concentration in accordance with USA ANSI-ASHRAE standard 34-2019 of less than 400 ppm.

**[Table 1]**

| Item | Unit | Comparative example 1 | Comparative example 2 | Example 1 | Example 2 | Example 3 | Example 4 | Example 5 | Example 6 | Comparative example 3 |
|---|---|---|---|---|---|---|---|---|---|---|
| E-HFO-1132 | mass% | R410A | 60.0 | 63.0 | 68.3 | 70.5 | 76.5 | 81.6 | 83.7 | 100.0 |
| R32 | mass% | | 40.0 | 37.0 | 31.7 | 29.5 | 23.5 | 18.4 | 16.3 | 0.0 |
| GWP | - | 2088 | 271 | 250 | 215 | 200 | 159 | 125 | 111 | 1 |
| COP ratio | % (relative to R410A) | 100 | 101 | 101 | 100 | 100 | 100 | 100 | 100 | 101 |
| Refrigerating capacity ratio | % (relative to R410A) | 100 | 109 | 109 | 108 | 108 | 106 | 105 | 104 | 99 |
| Condensation glide | K | 0.12 | 0.02 | 0.03 | 0.06 | 0.08 | 0.12 | 0.15 | 0.16 | 0.00 |
| Acceptable concentration | ppm | 1000 | 495 | 481 | 458 | 449 | 426 | 408 | 400 | 350 |
| Toxicity class | - | A | A | A | A | A | A | A | A | B |

**[Table 2]**

| Item | Unit | Comparative example 1 | Example 7 | Example 8 | Example 9 | Example 10 | Example 11 | Example 12 |
|---|---|---|---|---|---|---|---|---|
| E-HFO-1132 | mass% | R410A | 72.0 | 71.6 | 71.6 | 82.0 | 81.6 | 81.6 |
| R32 | mass% | | 28.0 | 28.0 | 28.0 | 18.0 | 28.0 | 28.0 |
| HFO-1132a | mass% | | 0.0 | 0.4 | 0.0 | 0.0 | 0.4 | 0.0 |
| R124 | mass% | | 0.0 | 0.0 | 0.4 | 0.0 | 0.0 | 0.4 |
| GWP | - | 2088 | 190 | 190 | 192 | 122 | 122 | 125 |
| COP ratio | % (relative to R410A) | 100 | 100 | 100 | 100 | 100 | 100 | 100 |
| Condensation glide | K | 0.12 | 0.09 | 0.16 | 0.18 | 0.15 | 0.22 | 0.25 |
| Refrigerating capacity ratio | % (relative to R410A) | 100 | 107 | 108 | 107 | 105 | 105 | 105 |
| Acceptable concentration | ppm | 1000 | 443 | 442 | 443 | 406 | 405 | 406 |
| Toxicity class | - | A | A | A | A | A | A | A |

It is understood, from Tables 1 and 2, that when the present refrigerant comprises 63.0-68.3 mass% of HFO-1132(E), based on the total amount of HFO-1132(E) and R32, the GWP is 250 or less, the ASHRAE toxicity class is A, and the refrigerating capacity ratio relative to R410A is 108% or more.

It is understood, from Tables 1 and 2, that when the present refrigerant comprises 70.5-76.5 mass% of HFO-1132(E), based on the total amount of HFO-1132(E) and R32, the GWP is 200 or less, the ASHRAE toxicity class is A, and the condensation glide is 0.12K, which is the same as that of R410A, or 0.12 K or less.

It is understood, from Tables 1 and 2, that when the present refrigerant comprises 81.6-83.7 mass% of HFO-1132(E), based on the total amount of HFO-1132(E) and R32, the GWP is 125 or less, and the ASHRAE toxicity class is A.

Further, it is understood, in a stability test performed under the following conditions, that generation of a solid matter is suppressed when the present refrigerant comprises moisture in a prescribed proportion as shown in Table 3.

### <Preparation of Samples>

A prescribed amount of water was added to compositions each comprising HFO-1132(E) and R32 shown in Table 3 to adjust water contents in the respective compositions comprising HFO-1132 (E) and R32 to 10, 100, 1000, and 2000 mass ppm. Each of these compositions comprising HFO-1132 (E) and R32 having the thus adjusted water contents was encapsulated in a container, and oxygen was blown into the container to adjust an oxygen proportion in the composition comprising HFO-1132(E) and R32 as shown in Table 3 based on the composition comprising HFO-1132 (E) and R32. In this manner, respective fluoroethylene compositions shown in Table 3 having the amounts of moisture and oxygen adjusted to prescribed proportions were obtained.

Respective compositions shown in Table 3 in each of which no water was contained and the amount of oxygen was adjusted to a prescribed proportion were obtained in the same manner as in the above-described examples except that no water was added or no oxygen was added to the compositions comprising HFO-1132 (E) and R32 used above.

### <Evaluation Method>

### (Stability Test of Composition Comprising HFO-1132 (E) and R32)

Each of the compositions obtained in the above-described examples and comparative examples was subjected to a stability test as follows. To a glass tube (ID 8 mmΦ x OD 12 mmΦ x L 300 mm) having one end melt-sealed, the composition was added to a content of HFO-1132(E) of 0.01 mol. The resultant tube was hermetically closed by melt-sealing. This tube was allowed to stand still in a constant-temperature vessel in an atmosphere of 150°C, and held in this state for 1 week. Thereafter, the tube was taken out of the constant-temperature vessel and cooled, and the appearance was confirmed and an acid content (acid component) in a gas present in the tube was analyzed to evaluate the stability of the composition.

In the stability test of the composition, the acid content of the gas was analyzed by the following method. In the cooled tube, the gas remaining in the tube was completely solidified by using liquid nitrogen. After that, the tube was opened and gradually thawed to recover the gas in the Tedlar bag. 5 g of pure water was injected into the Tedlar bag so as to extract the acid into pure water while making contact with the recovered gas well. The extract was detected by ion chromatography to measure the content (mass ppm) of a fluoride ion (F-).

**[Table 3]**

| No. | Example / Comparative example | E-HFO-1132 (mass%) | R32 (mass%) | Amount of water added (mass ppm) | Amount of oxygen added (mol%) | Acid content (mass ppm) | Appearance (confirmation of presence/absence of solid matter) |
|---|---|---|---|---|---|---|---|
| 1 | Comparative example 4 | | | O(N.D.) | 0 | <1 | absent |
| 2 | Comparative example 5 | | | 10 | 0 | <1 | absent |
| 3 | Comparative example 6 | | | 100 | 0 | <1 | absent |
| 4 | Comparative example 7 | | | 1000 | 0 | <1 | absent |
| 5 | Comparative example 8 | | | 2000 | 0 | <1 | present |
| 6 | Comparative example 9 | | | O(N.D.) | 0.01 | 65 | absent |
| 7 | Example 20 | | | 10 | 0.01 | 35 | absent |
| 8 | Example 21 | 82.0 | 18.0 | 100 | 0.01 | 20 | absent |
| 9 | Example 22 | | | 1000 | 0.01 | <1 | absent |
| 10 | Comparative example 10 | | | 2000 | 0.01 | <1 | present |
| 11 | Comparative example 11 | | | O(N.D.) | 0.1 | 170 | absent |
| 12 | Example 23 | | | 10 | 0.1 | 80 | absent |
| 11 | Example 24 | | | 100 | 0.1 | 50 | absent |
| 12 | Example 25 | | | 1000 | 0.1 | 30 | absent |
| 13 | Comparative example 12 | | | 2000 | 0.1 | <1 | present |

It is understood from these results that the stability of a refrigerant composition is improved when the refrigerant composition comprises a small amount of moisture.

## Claims

1. Use of a composition comprising
(1) a refrigerant which comprises
(i) ≥ 99.5 mass% in total of trans-1,2-difluoroethylene (HFO-1132(E)) and difluoromethane (R32), based on the entire refrigerant, and
(ii) 63.0-68.3 mass%, or 70.5-76.5 mass%, or 81.6-83.7 mass%, of HFO-1132 (E), based on the total of HFO-1132(E) and R32; and
(2) water, the water being contained in an amount of ≤ 0.1 mass%, based on the entire composition,
as a working fluid in a refrigerating machine.

2. The use of claim 1, wherein the refrigerant further comprises at least one member selected from methylamine, acetylene, HFO-1141, HFO-1123, HFC-143a, HFC-134a, HFO-1132a, Z-HFO-1132, HFO-1243zf, HFC-245cb, HCFC-1122, HCFC-124, CFC-1113, and 3,3,3-trifluoropropyne in an amount of 0.5 mass% or less based on the entire refrigerant.

3. The use of claim 1 or 2, wherein the composition is used as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R474A, R479A, R502, R507, R513A, R1234yf, or R1234ze.

4. A refrigeration method comprising a step of operating a refrigeration cycle using the composition as defined in claim 1 or 2.

5. A refrigerating machine comprising the composition as defined in claim 1 or 2 as a working fluid.

## Patentansprüche

1. Verwendung einer Zusammensetzung, die Folgendes umfasst:
(1) ein Kältemittel, welches Folgendes umfasst:
(i) insgesamt ≥ 99,5 Massenprozent trans-1,2-Difluorethylen (HFO-1132(E)) und Difluormethan (R32), bezogen auf das gesamte Kältemittel, und
(ii) 63,0-68,3 Massenprozent oder 70,5-76,5 Massenprozent oder 81,6-83,7 Massenprozent HFO-1132(E), bezogen auf die Gesamtmenge an HFO-1132(E) und R32; und
(2) Wasser, wobei das Wasser in einer Menge von ≤ 0,1 Massenprozent, bezogen auf die gesamte Zusammensetzung, enthalten ist,
als Arbeitsmedium in einer Kältemaschine.

2. Verwendung gemäß Anspruch 1, wobei das Kältemittel ferner mindestens einen Vertreter umfasst, ausgewählt aus Methylamin, Acetylen, HFO-1141, HFO-1123, HFC-143a, HFC-134a, HFO-1132a, Z-HFO-1132, HFO-1243zf, HFC-245cb, HCFC-1122, HCFC-124, CFC-1113 und 3,3,3-Trifluorpropin, in einer Menge von 0,5 Massenprozent oder weniger, bezogen auf das gesamte Kältemittel.

3. Verwendung gemäß Anspruch 1 oder 2, wobei die Zusammensetzung als alternatives Kältemittel für R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R474A, R479A, R502, R507, R513A, R1234yf oder R1234ze verwendet wird.

4. Kühlverfahren, umfassend einen Schritt des Betreibens eines Kühlkreislaufs unter Verwendung der in Anspruch 1 oder 2 definierten Zusammensetzung.

5. Kältemaschine, die die in Anspruch 1 oder 2 definierte Zusammensetzung als Arbeitsmedium umfasst.

## Revendications

1. Utilisation d'une composition comprenant
(1) un réfrigérant qui comprend
(i) ≥ 99,5 % en masse au total de trans-1,2-difluoroéthylène (HFO-1132 (E)) et de difluorométhane (R32), sur la base de l'ensemble du réfrigérant, et
(ii) 63,0-68,3 % en masse, ou 70,5-76,5 % en masse, ou 81,6-83,7 % en masse, de HFO-1132 (E), sur la base du total de HFO-1132 (E) et de R32 ; et
(2) de l'eau, l'eau étant contenue en une quantité de ≤ 0,1 % en masse, sur la base de l'ensemble de la composition,
comme un fluide de travail dans une machine frigorifique.

2. Utilisation selon la revendication 1, dans laquelle le réfrigérant comprend en outre au moins un élément sélectionné parmi la méthylamine, l'acétylène, le HFO-1141, le HFO-1123, le HFC-143a, le HFC-134a, le HFO-1132a, le Z-HFO-1132, le HFO-1243zf, le HFC-245cb, le HCFC-1122, le HCFC-124, le CFC-1113 et le 3,3,3-trifluoropropyne en une quantité de 0,5 % en masse ou moins sur la base de l'ensemble du réfrigérant.

3. Utilisation selon la revendication 1 ou la revendication 2, dans laquelle la composition est utilisée comme un réfrigérant alternatif pour R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R474A, R479A, R502, R507, R513A, R1234yf ou R1234ze.

4. Procédé de réfrigération comprenant une étape de fonctionnement d'un cycle frigorifique en utilisant la composition telle que définie dans la revendication 1 ou la revendication 2.

5. Machine frigorifique comprenant la composition telle que définie selon la revendication 1 ou la revendication 2 comme fluide de travail.
